Europäisches Patentamt

European Patent Office

Office européen des brevets

(19)

(11) Publication number: **0 566 093 A1**

# EUROPEAN PATENT APPLICATION

(12)

(21) Application number: 93106076.8

(22) Date of filing: **14.04.93**

(51) Int. Cl.⁵: **C09J 7/02**

(30) Priority: **15.04.92 US 868777**

(43) Date of publication of application:
**20.10.93 Bulletin 93/42**

(84) Designated Contracting States:
**DE FR GB IT NL**

(71) Applicant: **MINNESOTA MINING AND MANUFACTURING COMPANY**
**3M Center,**
**P.O. Box 33427**
**St. Paul, Minnesota 55133-3427(US)**

(72) Inventor: **Webb, Richard J., c/o Minnesota Mining and**
**Manufact. Co.,**
**2501 Hudson Road,**
**P.O. Box 33427**
**St. Paul, Minnesota 55133-3427(US)**
Inventor: **Moon, John D., c/o Minnesota Mining and**
**Manufact. Co.,**
**2501 Hudson Road,**
**P.O. Box 33427**
**St. Paul, Minnesota 55133-3427(US)**
Inventor: **Ward, Gene R., c/o Minnesota Mining and**
**Manufact. Co.,**
**2501 Hudson Road,**
**P.O. Box 33427**
**St. Paul, Minnesota 55133-3427(US)**

(74) Representative: **VOSSIUS & PARTNER**
**P.O. Box 86 07 67**
**D-81634 München (DE)**

(54) **Thermally conducting electrically insulating pressure sensitive adhesive.**

(57) A thermally conductive, electrically insulative pressure sensitive adhesive is provided. The adhesive comprises a (1) polymer prepared from an alkyl acrylate or methacrylate having from 1 to 12 carbons in the alkyl group and a polar comonomer, and (2) from 20 to 400 parts by weight per 100 parts by weight of the monomers of thermally conductive, electrically insulative particles. The particles are randomly dispersed throughout the polymer. The adhesive may be provided in the form of a transfer tape.

EP 0 566 093 A1

Rank Xerox (UK) Business Services
(3.10/3.6/3.3.1)

The present invention relates a pressure sensitive adhesive containing thermally conductive, electrically insulative particles and a transfer tape made from such an adhesive. The adhesive of the present invention exhibits superior adhesion to a variety of surfaces, including high energy surfaces, and has particular utility in the assembly of electronic components.

The assembly of electronic components often requires the use of a thermally conductive, electrically insulative layer at the point of contact. For example, such layers are required for the attachment of heat sinks to a variety of electronic components, including photovoltaic concentrator cells, hybrid packages, multi-chip modules, flex circuits and ceramic, plastic and metal packaged integrated circuits. The function of the layer in these applications is to provide a heat transfer medium for the conduction of heat away from heat sensitive electronic components to the heat sink.

Two options exist for such attachment of components. One option is to mechanically fasten the components and provide a laminate or composite structure at the point of contact that is thermally conductive and electrically insulative. Mechanically fastened structures of this nature are described in U.S. Pat. No. 4,574,879 (DeGree et. al), U.S. Pat. No. 4,810,563 (DeGree et. al.), U.S. Pat. No. 5,011,870 (Peterson) and U.S. Patent No. 4,869,954 (Squitieri). Mechanical fastening of components involves several steps and is time-consuming to perform, especially as electronic components become smaller.

The other option is to adhesively bond the components with an adhesive that is by virtue of its formulation thermally conductive and electrically insulative. Adhesives of this type are known in the art but have disadvantages of one form or another. In some cases, the use of these adhesives is preferred over mechanically fastening components because the need for the extra parts and handling associated with mechanical fastening is eliminated.

U.S. Pat. No. 4,548,862 (Hartman) discloses a thermally conductive, electrically insulative tape comprising a pressure sensitive adhesive layer containing bridges of particles with a ferromagnetic core and an electrically insulative surface such as alumina, zirconia, zinc oxide or tin oxide. The bridges extend through the thickness of the tape from face to face. The particles are present in less than ten volume percent of the layer, an amount that does not provide adequate thermal conductivity for many applications, especially electronic applications. An essential element of the invention is the use of a magnetic field to align the particles and form the bridges. Only after the application of a magnetic field is the adhesive operative for its intended use.

U.S. Pat. No. 4,772,960 (Dunn et al.) discloses a thermally conductive adhesive composition that is stated to have utility for mounting heat generating electrical components to heat sinks. It comprises 30 to 80 % by weight of powdered aluminum filler, at least one polymerizable acrylate ester monomer system, a free radical initiator, and optionally a metal chelator. The powdered aluminum filler can be elemental aluminum metal or anhydrous aluminum oxide. The adhesive is applied to either or both of the surfaces to be joined, the surfaces are abutted together, and the adhesive is caused "to cure, as by application of a primer or exclusion of oxygen." (column 2, lines 67-68). Such an adhesive bonding system is labor intensive and may require clamping of the parts until cure of the adhesive is affected.

The Furon Division of CHR Industries, Inc. sells a thermally conductive pressure sensitive adhesive transfer tape called TR-3 tape. The TR-3 tape is believed to be comprised of a thermosetting, high temperature performance, acrylic pressure sensitive adhesive. The acrylic portion of the adhesive is believed to be a copolymer of methyl acrylate and 2-ethylhexyl acrylate. The adhesive formulation does not contain a polar monomer. The main drawback of the adhesive of the TR-3 tape is that it exhibits only fair adhesion to high energy surfaces.

Chomerics, Inc. sells a pressure sensitive acrylic adhesive, Thermattach 405, which is loaded with aluminum oxide and coated onto a 0.002 inch (0.050 mm) thick aluminum carrier. The technical bulletin for this adhesive states that the purpose of the aluminum foil is to provide added thermal conductivity for applications where electrical isolation is not required. Thus, Thermattach 405 is not designed to be electrically insulative.

A. I. Technology, Inc. sells a low bond strength thermoplastic film adhesive, TP 7208, designed for bonding heat sink, component and substrate. TP 7208 is believed to be a tacky, pressure sensitive, electrically insulating, non-curing film adhesive. The adhesive is believed to be a polymer of 2-ethylhexyl acrylate and acrylamide. This adhesive film contains a woven scrim made from 2 micron diameter glass fiber. The main disadvantage of this adhesive is that it exhibits low 72 hour room temperature adhesion. TP 7208 is also said to be available in liquid form.

Thus, it would be advantageous to provide a simple, effective bonding system in the form of a pressure sensitive adhesive having low thermal resistance, good adhesion to high energy surfaces, and electrically insulating properties. In addition, it would be advantageous to provide a pressure sensitive adhesive in a film or tape form. It would also be advantageous to provide a bonding system that does not require a separate curing step or mechanical fastening of bonded parts, and provides a thin adhesive layer of well controlled thickness without the difficulty of trying to spread a uniform layer of liquid adhesive. Such a bonding system would provide savings of time and energy.

In accordance with the present invention, there is provided a thermally conductive, electrically insulative pressure sensitive adhesive comprising (a) an acrylate polymer and (b) thermally conductive electrically insulative particles randomly dispersed throughout the polymer. The acrylate polymer is prepared from a monomer mixture containing (i) an alkyl acrylate or methacrylate having 1 to 12 carbon atoms in the alkyl group and (ii) a polar monomer that is copolymerizable with the alkyl acrylate or methacrylate. The thermally conductive, electrically insulative particles comprise from 20 to 400 parts by weight per 100 parts by weight of the monomer mixture.

The pressure sensitive adhesive of the invention provides superior adhesion to a variety of surfaces, including high energy surfaces. It also provides an adhesive joint that has a low resistance to the transfer of heat, due to the high thermal conductivity of the adhesive layer.

The adhesive of the present invention is also electrically insulating and exhibits a high breakdown voltage indicating that the adhesive can withstand a high voltage before arcing.

Additionally, the adhesive of the present invention can be provided in the form of a tape (such as a transfer tape) which, when applied, provides a layer of adhesive of controlled thickness. This eliminates the need to spread a uniform layer of adhesive on the surfaces to be joined and provides a preformed joining layer of uniform thickness. Transfer tapes of the invention preferably consist essentially of the adhesive with no other layer other than a release liner.

The alkyl acrylate or methacrylate of the monomer mixture has from 1 to 12 carbon atoms in the alkyl group. Preferably, it has from 4 to 12 carbons in the alkyl group.

Examples of alkyl acrylates or methacrylates suitable for practicing the invention are known. They may be selected from the group consisting of butyl acrylate, hexyl acrylate, 2-ethylhexyl acrylate, octyl acrylate, isooctyl acrylate, decyl acrylate and dodecyl acrylate.

The presence of the polar monomer in the monomer mixture is an essential element of the practice of the invention. The polar monomer enables the preparation of a strong adhesive that exhibits high adhesion, cohesive and shear strength.

Polar monomers useful in the invention include a wide variety of materials. Examples of such materials are carboxylic acids and their corresponding anhydrides, such as acrylic acid and anhydride, methacrylic acid and anhydride, itaconic acid and anhydride, maleic acid and anhydride, etc. Examples of other useful polar monomers include nitrogen-containing materials such as cyanoalkyl acrylate, acrylamide, substituted acrylamide, N-vinyl pyrrolidone, N-vinyl caprolactam, N-vinyl piperidine, acrylonitrile, etc. Still other useful polar monomers include hydroxyalkyl acrylate, vinyl chloride, etc.

Typically, the alkyl acrylate or methacrylate is present in an amount from about 50 to about 98 (preferably from about 70 to about 97) parts by weight per 100 parts by weight of the monomer mixture. Correspondingly, the polar monomer is typically present in an amount from about 50 to 2 (preferably 30 to about 3) parts by weight per 100 parts by weight of the monomer mixture. However, if an acid-containing monomer such as acrylic acid is utilized, the preferred amount of polar monomer falls within a range of from about 6 to about 20 parts by weight per 100 parts by weight of the monomer mixture.

A number of thermally conductive, electrically insulative particles are suitable for use in the invention. They include, for example, particles of aluminum oxide, aluminum nitride, titanium dioxide, boron nitride, and silicon nitride. The preferred particle is made of aluminum oxide because of its ready availability and lower cost.

Typically they have a particle size of from about 0.5 micron to about 250 microns, preferably about 1 micron to about 100 microns, and most preferably from about 10 microns to about 70 microns. Preferably the particles are present in an amount of from about 80 to about 250 parts by weight per 100 parts by weight of the monomer mixture. The particles may have any shape e.g. spherical, acicular, or flake. The choice of shape is dependent on the rheology of the selected adhesive resin and ease of processing of the final resin/particle mix. Combinations of particles of different size, shape, and type of particles may be used in the invention.

Polymerization can be accomplished by a variety of techniques. Examples of such techniques include heat, electron beam, gamma radiation, or ionizing radiation. When radiation is used it is preferably carried out in the absence of oxygen by using an inert atmosphere such as nitrogen, carbon dioxide, helium, argon, etc. Oxygen can also be excluded by sandwiching the liquid polymerizable mixture between layers of solid sheet material and irradiating through the sheet material. Care should be exercised to select materials which allow the radiation to penetrate into the entire coating during polymerization.

An initiator may be used to facilitate polymerization. Suitable initiators include thermal initiators and photoinitiators. Examples of useful thermal initiators are known. They include free-radical initiators such as azo compounds such as azobis (iso-butyronitrile), hydroperoxides such as tert-butyl hydroperoxide, peroxides such as benzoyl peroxide or cyclohexanone peroxide, and also redox catalysts such as the persulfate/bisulfite pair, peroxide/tertiary amine combinations, or other redox couples capable of initiating free-radical polymerization.

Examples of useful photoinitiators include acyloin ethers (such as benzoin ethyl ether, benzoin isopropyl ether, anisoin ethyl ether and anisoin isopropyl ether), substituted acyloin ethers (such as alpha-hydroxymethyl benzoin ethyl ether), Michler's ketone (4,4'-tetramethyldiaminobenzophenone), 2,2-dimethoxy-2-phenylacetophenone (such as KB-1 from Sartomer or "Irgacure" 651 from Ciba-Geigy), etc.

Whatever type of initiator is employed, it is typically present in an amount of from about 0.01 to 5 parts by weight per 100 parts by weight of the monomer mixture.

For some pressure sensitive adhesive applications, crosslinking may be desired. This can be achieved by adding a crosslinking agent in conjunction with the photoinitiator. Some useful crosslinking agents, however, also function as photopolymerization initiators. 2,4-bis(trichloromethyl)-6-p-methoxystyryl-s-triazine is an example of such a crosslinking agent. Other suitable crosslinking agents include photoactive crosslinking agents such as benzaldehyde, acetaldehyde, anthraquinone, substituted anthraquinones, various benzophenone-type compounds and certain chromophore-substituted vinyl-halomethyl-s-triazines. Heat-activated crosslinking agents may also be employed. These include lower-alkoxylated amino formaldehyde condensate having from one to four carbon atoms in the alkyl group, for example, hexamethoxymethyl melamine (available as "Cymell" 303 from American Cyanamid Co.) or tetramethoxymethyl urea (available as "Beetle" 65 from American Cyanamid Co.) or tetrabutoxymethyl urea ("Beetle" 85). Other useful crosslinking agents include multifunctional acrylates such as 1,6-hexanediol diacrylate, tripropylene glycol diacrylate, etc. The crosslinking agent is typically present in an amount of from about 0.01 to 5 parts by weight per 100 parts by weight of the monomer mixture.

Other additives such as fillers, thickeners, pigments, etc. may also be added as long as they do not interfere with the thermal transfer properties of the adhesive or render the adhesive electrically conductive.

The tape of the invention can be prepared by mixing the particles into the uncured pressure sensitive adhesive, coating the mixture onto a supporting surface, such as a release liner and curing the pressure sensitive adhesive as described herein. The adhesive layer can be coated from solution or emulsion or coated as the neat, solvent-free reactive monomer and/or oligomers. The pressure sensitive adhesive can be used to fabricate a transfer tape. In addition, it can also be used to fabricate a patterned transfer adhesive comprising a carrier web having adhesive in recesses.

The novel tapes of the invention can be used in many facets of electronic assembly such as for affixing components to heat sinks and the attachment of heat sinks to hybrid packages, multi-chip modules, ceramic, plastic, and metal integrated circuit packages and in the assembly of solar concentrator cells and flex circuits. It can also be used as a temporary fastening device in an application where the assembly will later be clamped or mechanically fastened with the tape remaining in place to provide a low resistance thermal path between the assembly parts.

## TEST METHODS

The following tests were used to evaluate the present invention:

### Thermal Resistance

Thermal resistance is the preferred measure of the thermal transfer properties of a system because it describes the thermal performance of the adhesive layer when it is used in a complete assembly. Thermal conductivity, on the other hand, is a measure of only the bulk conductivity of the adhesive, and does not account for the interface resistance present when the adhesive is used to join two heat transfer surfaces. In assemblies made with thin adhesive layers, the interface resistance can comprise as much as 50% of the total resistance of the adhesive joint.

The thermal resistance of the invention was determined according to the following test method. Briefly, a transistor in a TO-220 package was adhesively bonded without clamping or mechanical fastening to an aluminum heat sink with an adhesive to be tested.

A known amount of power was supplied to the transistor and the temperature difference between the transistor and the heat sink was measured. The temperature of the transistor was measured with a K-type thermocouple having 0.13 millimeter diameter wire spot-welded to the metal base of the transistor package.

The temperature of the heat sink was measured by pressing a thermocouple against the inside of a 0.8 millimeter hole drilled through the center of the heat sink, perpendicular to the heat transfer surface. The thermocouple was secured with a set-screw and held very close to the heat transfer surface. When the transistor was affixed to the heat sink, it was placed so that the heat sink thermocouple was centered beneath the transistor package. The thermal resistance was calculated according to the following formula:

$$\text{Thermal Resistance} = \frac{(T_2 - T_1)\ A}{P}$$

wherein

$T_2$ = the temperature of the transistor
$T_1$ = the temperature of the heat sink
A = the heat transfer area
P = power supplied to the transistor

The thermal resistance has the units of $°C\text{-}cm^2/Watt$. All values of thermal resistance are reported for a nominal power dissipation of 7 Watts.

## Average Breakdown Voltage

Breakdown voltage values were determined according to ASTM Test Method D-149.

## 72 Hour Room Temperature Adhesion

72 hour room temperature adhesion was determined as follows: a 51 micron (2 mils) thick nonanodized aluminum foil was laminated to an adhesive film to be tested. The composite thus formed was cut into 25.4 mm (1 inch) by 152.4 mm (6 inch) strips and bonded to a 51 mm (2 inch) by 127 mm (5 inch) aluminum panel by passing a 2 kg (4.5 lb) rubber coated steel roller over the composite two times. After about 72 hours at room temperature (e.g. 20°C), the bonded panel was clamped in the jaws of a tensile tester such as an Instron model 1102 tensile tester (available from Instron Corp. of Canton, Massachusetts) and tested for 90° peel adhesion at a separation rate of 30.5 cm (12 inches)/minute. The adhesion reported was the average of 2 test samples.

## 70°C Shear Adhesion

Shear adhesion at 70°C was determined as follows: Individual 12.7 mm (0.5 inch) by 25.4 mm (1 inch) test coupons were prepared using the transfer tape laminated to a 120 micron (5 mils) thick anodized aluminum foil cut to 12.7 mm (0.5 inch) width overlapped 25.4 mm ( 1 inch) on the aluminum substrate. The bonds were prepared as described above in the 72 hour room temperature adhesion test. Duplicate test coupons were clamped 2° from vertical in a oven maintained at 70°C with a 500 g. weight attached to the free end of the tape. The time to failure was determined in minutes. If failure did not occur by 10,000 minutes, the test was discontinued.

## EXAMPLES

The following examples further describe the present invention. Unless otherwise noted, all parts and percentages used in the accompanying examples are parts and percentages by weight.

## EXAMPLES 1-16

Adhesives according to this invention were prepared. A mixture of isooctyl acrylate (IOA) and 0.04 parts of photoinitiator [2,2-dimethoxy-2-phenylacetophenone (available as "Irgacure" 651)] per 100 parts IOA was partially photopolymerized to a syrup having a viscosity of about 2000 centipoise at room temperature (RT). The syrup (45 parts) was combined with acrylic acid (AA) and aluminum oxide ($Al_2O_3$) having an average particle size of 30 microns to provide 100 parts of a polymerizable composition. The resulting composition was mixed until well blended. To this composition, 0.25 parts of additional photoinitiator (Irgacure 651) were added along with crosslinker [tripropylene glycol diacrylate (TPGDA)] and mixed until blended. The mixture was then degassed. The particle-containing blend was then coated between two silicone-release treated, UV transparent polyester films to a desired thickness. The resulting composite structure was then simultaneously exposed on each side through the polyester film for about 3 minutes (for Examples 1-5 and 9-16) and for about 6 minutes (for Examples 6-8) to a bank of forty-six 20 watt black light fluorescent lamps from a distance of 10 centimeters on each side to photopolymerize the coating to a pressure-sensitive adhesive state. The tape was then tested for thermal resistance, breakdown voltage, 72 hour room temperature adhesion and 70°C shear as described hereinabove. The amounts of various components and the test results are given in Table I below. Note that popoff (PO) is defined as failure of the adhesive at the adhesive/substrate interface wherein the adhesive cleanly falls away from the substrate. Cohesive failure (CAF) is defined as failure of the adhesive within the bulk of the adhesive wherein adhesive residue is left on the substrate.

TABLE I

| Ex. No. | Parts IOA | Parts AA | Parts TPGDA | Parts Al$_2$O$_3$ | Adhesive Thickness (microns) | Thermal Resistance [(°C-cm$^2$)/W] | Average Breakdown Voltage (kV/mil) | 72 Hr. Room Temp. Adhesion (N/100mm) | 70°C Shear (minutes) |
|---|---|---|---|---|---|---|---|---|---|
| 1 | 90.4 | 9.6 | 0.6 | 248 | 140 | 3.1 | NT | 39.4 | 10,000+ |
| 2 | 92.8 | 7.2 | 0.6 | 248 | 160 | 3.2 | NT | 32.8 | 10,000+ |
| 3 | 88.6 | 11.4 | 0.5 | 167 | 150 | 3.9 | NT | 60.2 | 10,000+ |
| 4 | 94.0 | 6.0 | 0.5 | 167 | 150 | 4.5 | NT | 40.5 | 10,000+ |
| 5 | 88.6 | 11.4 | 0.4 | 122 | 140 | 4.9 | NT | 73.3 | 10,000+ |
| 6 | 91.0 | 9.0 | 0.3 | 82 | 220 | 6.6 | 0.85 | 76.2 | 10,000+ |
| 7 | 91.1 | 8.9 | 0.4 | 186 | 220 | 4.1 | 1.11 | 62.4 | 10,000+ |
| 8 | 88 | 12 | 0.2 | 122 | 220 | 5.9 | 1.11 | 82.1 | 10,000+ |
| 9 | 97 | 3 | 0.1 | 82 | 140 | 7.2 | 0.36 | 94.8 | 1 CAF |
| 10 | 97 | 3 | 0.1 | 186 | 140 | 4.7 | 0.44 | 74.4 | 1 CAF |
| 11 | 97 | 3 | 0.3 | 82 | 140 | 6.8 | 0.64 | 52.6 | 91 PO |
| 12 | 97 | 3 | 0.4 | 186 | 150 | 4.6 | 0.78 | 30.8 | 10,000+ |
| 13 | 94 | 6 | 0.2 | 54 | 140 | 7.7 | 0.59 | 71.7 | 13.5 PO |
| 14 | 94 | 6 | 0.4 | 300 | 150 | 3.2 | 0.58 | 48.8 | 10,000+ |
| 15 | 94 | 6 | 0 | 122 | 140 | 5.9 | 0.55 | 71.7 | 1 CAF |
| 16 | 94 | 6 | 0.2 | 122 | 70 | 2.7 | 0.67 | 42.7 | 2258 PO |

CAF = Cohesive Failure          PO = Popoff          NT = Not tested

## EXAMPLES 17-32

Samples of the adhesive of the invention were prepared using various polar monomers (N-vinylcaprolactam, N-vinylpyrrolidone, dimethylacrylamide) with isooctyl acrylate (IOA). The adhesive was coated out to two thicknesses, 51 microns (2 mils) and 254 microns (10 mils).

Samples were prepared by blending 100 parts of the IOA and polar monomer mixture together with 0.04 parts 2,2-dimethoxy-2-phenylacetophenone photoinitiator (KB-1 from Sartomer). This mixture was partially photopolymerized to a syrup having a viscosity of about 2000 centipoise at room temperature (RT). To 45 parts of the resultant mixture, 0.25 parts additional KB-1 were added followed by 0.15 parts 1,6-hexanediol diacrylate (HDDA), and 55 parts $Al_2O_3$ (30 micron) and mixed until well dispersed. The particle-containing blend was degassed and then coated between two silicone-release treated, UV transparent polyester films to the desired thickness. The resulting composite structure was then simultaneously exposed on each side through the polyester film to 500 millijoules per side for thick samples (greater than 250 micron) and to 250 millijoules per side for the thin (less than 75 micron) samples. Here again, a bank of forty-six 20 watt black light fluorescent lamps was used on each side of the composite structure to photopolymerize the adhesive. The samples were tested as described in the test method section. The amounts of the various components of the adhesive formulation and the test results obtained are listed in Table II.

TABLE II

| Ex. No. | Parts IOA | Polar Monomer | Parts Polar Monomer | Parts HDDA | Parts $Al_2O_3$ | Adhesive Thickness (microns) | Thermal Resistance [(°C-cm²)/W] | 72 Hr. Room Temp. Adhesion (N/100m) | 70°C Shear (Minutes) |
|---|---|---|---|---|---|---|---|---|---|
| 17 | 85 | NVC[1] | 15 | 0.3 | 122 | 300 | 11.4 | 123.7 | 10,000+ |
| 18 | 85 | NVC | 15 | 0.3 | 122 | 60 | 3.4 | 100.7 | 10,000+ |
| 19 | 80 | NVC | 20 | 0.3 | 122 | 290 | 10.7 | 108.9 | 10,000+ |
| 20 | 80 | NVC | 20 | 0.3 | 122 | 70 | 4.2 | 85.9 | 10,000+ |
| 21 | 75 | NVC | 25 | 0.3 | 122 | 280 | 9.9 | 71.2 | 12/10,000+ (Retest) |
| 22 | 75 | NVC | 25 | 0.3 | 122 | 70 | 3.5 | 57.8 | 10,000+ |
| 23 | 70 | NVC | 30 | 0.3 | 122 | 290 | 10 | 47.1 | 10,000+ |
| 24 | 70 | NVC | 30 | 0.3 | 122 | 60 | 4.6 | 42.4 | 20/10,000+ (Retest) |
| 25 | 75 | NVP[2] | 25 | 0.3 | 122 | 290 | 9.7 | 84.3 | 10,000+ |
| 26 | 75 | NVP | 25 | 0.3 | 122 | 70 | 3.1 | 69.0 | 10,000+ |
| 27 | 75 | DMA[3] | 25 | 0.3 | 122 | 270 | 9.1 | 90.3 | 10,000+ |
| 28 | 75 | DMA | 25 | 0.3 | 122 | 60 | 2.9 | 78.3 | 10,000+ |
| 29 | 85 | NVC | 15 | 0.3 | 122 | 290 | 10.3 | 52.0 | 28 |
| 30 | 85 | NVC | 15 | 0.3 | 122 | 60 | 2.9 | 38.3 | 10,000+ |
| 31 | 80 | NVC | 20 | 0.3 | 122 | 280 | 9.4 | 61.8 | 15/10,000+ (Indiv. Samples) |
| 32 | 80 | NVC | 20 | 0.3 | 122 | 60 | 3.2 | 40.0 | 10,000+ |

[1] NVC = N-vinylcaprolactam    [2] NVP = N-vinylpyrrolidone    [3] DMA = Dimethylacrylamide

## EXAMPLE 33 AND COMPARATIVE EXAMPLE 1

The tape of Example 33 was prepared according to method described in Examples 1-16 except that the tape was coated to a thickness of 51 microns (2 mils). The tape was tested according to the test methods described above, except that (1) for the adhesion test a 127 micron (5 mils) anodized aluminum foil was

EP 0 566 093 A1

used as the backing layer and the substrate bonded to was aluminum, and (2) a 1000g weight was used for the 70°C shear test. Test results are given in Table III below.

A commercially available pressure sensitive adhesive transfer tape, TR-3 tape from Furon Division of CHR Division Industries, Inc. located in New Haven, Connecticut, was also tested. The TR-3 tape is a thermally conductive, electrically insulative transfer tape, believed to be a copolymer of methyl acrylate and 2-ethylhexyl acrylate. The TR-3 tape had a thickness of 51 microns (2 mils), and contained 57.7% by weight aluminum oxide particles. The tape was tested as in Example 33. Test results are given in Table III.

TABLE III

| Ex. No. | Thermal Resistance [(°C-cm$^2$)/W)] | 72 Hr. Room Temp. Adh. (N/100mm) | 70°C Shear (minutes) |
|---|---|---|---|
| 33 | 2.1 | 97 | 10,000 + |
| C-1 | 2.3 | 43 | 166 |

The data illustrates that the adhesive of the invention has good adhesion to high energy surfaces and outstanding 70°C shear adhesion. The data regarding the comparison between Example 33 and Example C-1 show that the adhesive of the invention has much better 72 hour room temperature adhesion and 70°C shear while exhibiting the equivalent thermal resistance.

**COMPARATIVE EXAMPLE 2**

A commercially available pressure sensitive adhesive tape, TP-7208 from A. I. Technology, Inc. was tested. The tape had a thickness of 120 microns and had a filler/glass fiber scrim content of approximately 70% by weight. The results of the tests are shown in Table IV. These results are compared with test results for the type of Example 1.

TABLE IV

| Ex | Adhesive Thickness (microns) | Thermal Resistance [(°C-cm$^2$)/w)] | 72 Hr. Room Temp. Adh. (N/100mm) | 70° Shear (minutes) |
|---|---|---|---|---|
| 1 | 140 | 3.1 | 39.4 | 10,000 + |
| C-2 | 120 | 2.8 | 26.5 | 5 P.O. |

The comparative data illustrates that the adhesive tape of the invention has good adhesion to high energy surfaces and outstanding 70°C shear adhesion. It further illustrates that the adhesive tape of the invention has much better 72 hour room temperature adhesion and 70°C shear than that of Example C-2 while exhibiting the equivalent thermal resistance.

**Claims**

1. A thermally conductive, electrically insulative pressure sensitive adhesive comprising (a) a polymer prepared from a monomer mixture containing (i) an alkyl acrylate or methacrylate having 1 to 12 carbon atoms in the alkyl group, and (ii) a polar monomer that is copolymerizable with the alkyl acrylate or methacrylate, and (b) from about 20 to about 400 parts by weight per 100 parts by weight of the monomer mixture of thermally conductive, electrically insulative particles, randomly dispersed throughout the polymer.

2. A pressure sensitive adhesive according to claim 1 wherein said polymer is crosslinked.

3. A pressure sensitive adhesive according to claim 1 or 2 wherein said alkyl acrylate or methacrylate has from 4 to 12 carbons in the alkyl group and is selected from the group consisting of butyl acrylate, hexyl acrylate, 2-ethylhexyl acrylate, octyl acrylate, isooctyl acrylate, decyl acrylate and dodecyl acrylate.

4.  A pressure sensitive adhesive according to any one of claims 1 to 3 wherein said polar monomer is selected from the group consisting of acrylic acid, methacrylic acid, itaconic acid, maleic acid, acrylic acid anhydride, methacrylic acid anhydride, itaconic acid anhydride, maleic acid anhydride, cyanoalkyl acrylate, acrylamide, N-vinyl pyrrolidone, N-vinyl caprolactam, N-vinyl piperidine, and acrylonitrile.

5.  A pressure sensitive adhesive according to any one of claims 1 to 4 wherein said alkyl acrylate or methacrylate is present in an amount of from about 70 to about 97 parts by weight per 100 parts by weight of the monomer mixture and said polar monomer is correspondingly present in an amount of from about 30 to about 3 parts by weight per 100 parts of the monomer mixture.

6.  A pressure sensitive adhesive according to any one of claims 1 to 5 wherein said particles are present at a level of from about 80 to about 250 parts by weight per 100 parts by weight of the monomer mixture.

7.  A pressure sensitive adhesive according to any one of claims 1 to 6 wherein said particles are selected from the group consisting of aluminum oxide, aluminum nitride, titanium dioxide, boron nitride, and silicon nitride.

8.  A pressure sensitive adhesive according to any one of claims 1 to 7 wherein there is further present from about 0.01 to about 5 parts by weight per 100 parts by weight of the monomer mixture of an initiator therefor.

9.  A pressure sensitive adhesive according to claim 1 to 8 wherein there is further present from about 0.01 to about 5 parts by weight per 100 parts by weight of the monomer mixture of a crosslinking agent therefor.

10. An adhesive tape comprising a supporting surface bearing a layer of thermally conductive, electrically insulative pressure sensitive adhesive according to any one of claims 1 to 9.

European Patent Office     **EUROPEAN SEARCH REPORT**     Application Number

EP    93 10 6076

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 436 159 (BEIERSDORF AG)<br>* page 5, line 36 - line 38; claim 1 *<br>--- | 1-10 | C09J7/02 |
| X | EP-A-0 296 577 (DOW CHEM.)<br>* page 3, line 55 *<br>--- | 1-10 | |
| X | WO-A-8 700 191 (3M)<br>* page 3, line 9 - line 11; claim 1 *<br>--- | 1-10 | |
| X | EP-A-0 194 706 (BANDO CHEM. IND.)<br>* page 6, line 1 - line 16; claims 1,2 *<br>--- | 1-6,8-10 | |
| A | EP-A-0 429 027 (DU PONT)<br>* claim 1 *<br>--- | 1 | |
| A,P | Derwent Publications Ltd., London, GB;<br>AN 92-229910<br>& JP-A-4 153 286 (NITTO DENKO) 26 May 1992<br>* abstract *<br><br>----- | 1 | |
| | | | **TECHNICAL FIELDS SEARCHED (Int. Cl.5 )**<br><br>C09J<br>C08K |

The present search report has been drawn up for all claims

| Place of search | Date of completion of the search | Examiner |
|---|---|---|
| THE HAGUE | 21 JULY 1993 | LENTZ J.C. |